# EUROPÄISCHE PATENTSCHRIFT

(11) **EP 0 937 357 B1**
(45) Veröffentlichungstag und Bekanntmachung des Hinweises auf die Patenterteilung: **05.09.2001**
(21) Anmeldenummer: 97949904.3
(22) Anmeldetag: 10.11.1997
(51) Int. Cl.: H04M 15/00, H04Q 7/38

(54) **VERFAHREN ZUR ENTFERNUNGSABHÄNGIGEN VERGEBÜHRUNG IN MOBILKOMMUNIKATIONSNETZEN**
PROCESS FOR LEVYING DISTANCE-DEPENDENT CHARGES IN CELLULAR COMMUNICATION NETWORKS
PROCEDE DE TAXATION EN FONCTION DE LA DISTANCE DANS DES RESEAUX DE TELECOMMUNICATIONS MOBILES

(30) Priorität: 11.11.1996 DE 19646485
(43) Veröffentlichungstag der Anmeldung: 25.08.1999
(73) Patentinhaber: DeTeMobil Deutsche Telekom MobilNet GmbH, 53227 Bonn (DE)
(72) Erfinder: KRETSCHMER, Frank, D-53773 Hennef (DE)
(74) Vertreter: Riebling, Peter, Dr.-Ing.
(86) Internationale Anmeldenummer: DE9702626
(87) Internationale Veröffentlichungsnummer: WO9821873

(56) Entgegenhaltungen:
- EP-A- 0 462 728
- WO-A-96/20570
- US-A- 5 345 498
- US-A- 5 511 113

## Beschreibung

Die Erfindung betrifft ein Verfahren zur entfernungsabhängigen Vergebührung in Mobilkommunikationsnetzen, insbesondere in GSM-Mobilkommunikationsnetzen.

Bekannterweise ist in Mobilkommunikationsnetzen, z.B. dem D-Netz oder dem E-Netz, die Vergebührung einer Verbindung von der Entfernung unabhängig. Dies trifft sowohl für Verbindungen innerhalb des Mobilfunknetzes als auch für Verbindungen vom Mobilfunknetz in ein Festnetz zu. Die momentan praktizierte Vergebührung benachteiligt also Mobilfunkteilnehmer, die überwiegend Ortsgespräche führen und übervorteilt Teilnehmer, die überwiegend Ferngespräche führen, da die Kosten pro Gebühreneinheit für alle Verbindungen gleich sind.

Die EP-A-0 462 728, von der im Oberbegriff des Patentanspruchs 1 ausgegangen wird, offenbart ein Verfahren zur entfernungsabhängigen Vergebührung in Mobilkommunikationsnetzen und betrifft insbesondere eine Einrichtung eines billigen lokalen Gesprächstarifs bei Gesprächen in das lokale Festnetz. Dies wird dadurch erreicht, daß die Rufweiterschaltung in das lokale Festnetz direkt durch intelligente Basisstationssteuerungen erfolgt und nicht über die zuständige Mobilvermittlungsstelle.

Aufgabe der Erfindung ist es, ein Verfahren zur entfernungsabhängigen Vergebührung vorzuschlagen, welches durch Berücksichtigung der tatsächlichen Belastung der vermittlungstechischen Einrichtungen und Leitungen eine am Teilnehmerverhalten orientierte Vergebührung erlaubt.

Diese Aufgabe wird durch die Merkmale des Patentanspruchs 1 gelöst.

Erfindungsgemäß werden die Möglichkeiten der IN-Funktionalität eines Mobilfunknetzes genutzt, um bei Verbindungen vom Mobilfunknetz in ein Festnetz zusätzlich zur zeitlichen Komponente variabel, in Abhängigkeit vom Aufenthaltsort des A-Teilnehmers (= rufender Mobilfunkteilnehmer) und von der gewählten B-Rufnummer (= Rufnummer des angerufenen Teilnehmers) die anfallenden Gebühren abzurechnen und bei Bedarf an der Mobilstation anzeigen zu lassen.

Der A-Teilnehmer wird als Intelligent Network-Mobile Originated Call (IN-MOC), also als Anruf mobilen Ursprungs, per Service Class Mark in der Heimatdatei (HLR) markiert. Auf diese Weise wird bei jedem Verbindungsaufbau oder Versuch eines Verbindungsaufbaus des Mobilfunkteilnehmers eine IN-Abfrage zum Dienstesteuerungspunkt (SCP) initiiert. Der Dienstesteuerungspunkt (SCP) bekommt von einem einer Mobilvermittlungseinrichtung zugeordneten Dienstevermittlungspunkt (M-SSP) unter anderem die Zielrufnummer und die Location_Number_A, welche die Lokalisierung des rufenden Teilnehmers auf Funkzellenbasis ermöglicht, mitgeteilt. Anhand dieser Angaben kann der Dienstesteuerungspunkt (SCP) den Dienstevermittlungspunkt (M-SSP) anweisen, in Abhängigkeit der berechneten Entfernung per Signalisierung "Send Charging Information" (SCI) die zugehörige Tarifzone in Form der "Charge Number" in das Billing-Ticket einzutragen. Bei der Rechnungsstellung ist dann die Tarifzone entsprechend zu berücksichtigen.

In einer anderen Variante wird der Dienstevermittlungspunkt (M-SSP) angewiesen, für diese Verbindung gar kein Billing-Record anzulegen, und die Vergebührung vollständig dem IN-Netz zu überlassen, so daß die Gebührendaten direkt im Dienstesteuerungspunkt (SCP) anfallen.

Eine Ergänzung des Verfahrens besteht darin, daß dem Mobilfunkteilnehmer durch den GSM-Dienst "Advice of Charge" (AoC), der vom IN-Netz per Funktion "Apply Charging" (AC) gesteuert wird, die Gebühren für die Verbindung angezeigt werden können.

Wechselt der rufende Teilnehmer im Verlaufe der Verbindung seinen Aufenthaltsort, so ist vorgesehen, daß weiterhin der ursprüngliche Aufenthaltsort; d.h. die ursprüngliche Tarifzone gilt (Ankerprinzip). Bei Inanspruchnahme von Rufumleitung kommt dieses Verfahren nicht zur Anwendung, da in diesem Fall keine IN-Abfrage angestoßen werden kann.

Im folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.
- Figur 1: zeigt eine schematische Darstellung einer Netzstruktur und die Funktionsweise des erfindungsgemäßen Verfahrens;
- Figur 2: zeigt eine schematische Darstellung des Signalisierungsflusses beim Verbindungsaufbau.

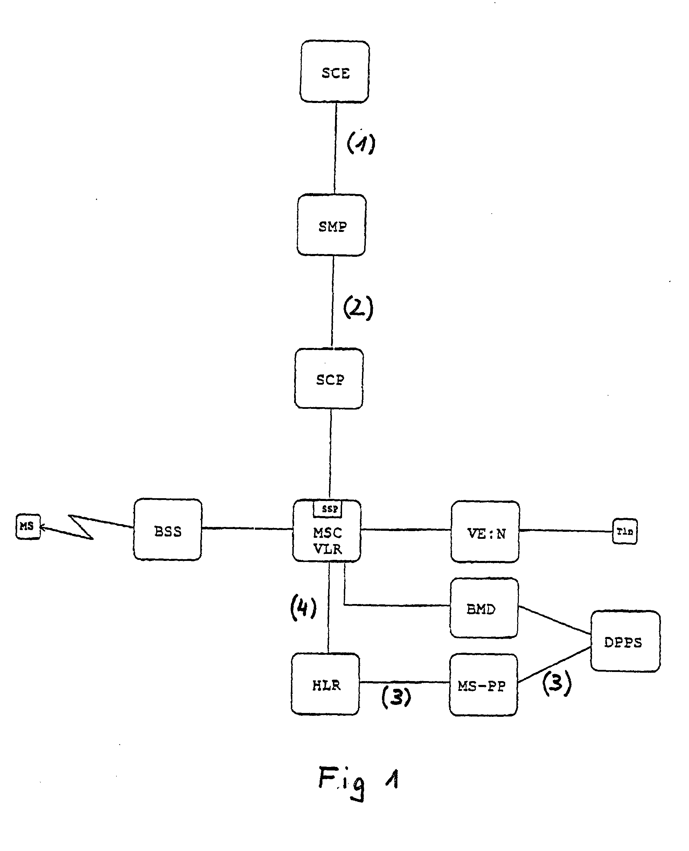

Wie aus Figur 1 ersichtlich ist, soll eine Verbindung zwischen einem Mobilfunkteilnehmer (MS) und einem Teilnehmer (Tln) eines Festnetzes hergestellt werden. Dazu kommuniziert der Mobilfunkteilnehmer (MS) mit einer Basisstation (BSS) des Mobilfunknetzes, wobei die Verbindung zum Teilnehmer (Tln) über eine Mobilvermittlungseinrichtung (MSC) und über eine Netzübergangsvermittlungsstelle (VE:N) des Festnetzes hergestellt wird.
Das Mobilfunknetz verfügt über ein Intelligentes Netzwerk (IN), welches verschiedene IN-Einrichtungen miteinander verbindet. Der Mobilvermittlungseinrichtung (MSC) ist ein Dienstevermittlungspunkt (SSP) zugeordnet, welcher Netzzugangs- und Vermittlungsfunktionen besitzt und IN-Anforderungen erkennt. Der Dienstevermittlungspunkt (SSP) ist mit einem übergeordneten Dienstesteuerungspunkt (SCP) verbunden, welcher Diensteanfragen verarbeitet und den Dienstevermittlungspunkt (SSP) entsprechend ansteuert.
Der Dienstesteuerungspunkt (SCP) ist wiederum mit einem zentralen Diensteverwaltungspunkt (SMP) verbunden, welcher für die Verwaltung der IN-Dienste zuständig ist.
Mit einem speziellen Werkzeug, der Dienste-Entwicklungsumgebung (SCE), können auf komfortable Weise bestehende IN-Dienste aktualisiert und neuer IN-Dienste kreiert werden.

In einem ersten Schritt (1) des erfindungsgemäßen Verfahrens wird mit Hilfe der Dienste-Entwicklungsumgebung (SCE: Service Creation Environment) ein MOC IN-Dienst kreiert, d.h. einen Dienst, der von Anrufen mobilen Ursprungs initiiert wird. Der neue IN-Dienst muß in der Lage sein, unter Berücksichtigung der zeitlichen Komponente einem rufenden Teilnehmer (MS) in Abhängigkeit von seinem Aufenthaltsort, von der B-Rufnummer des gerufenen Teilnehmers (Tln) und von der Service Class Mark (SCM) die entsprechende Tarifzone einschließlich der zugehörigen e-Parameter zuzuweisen. Dabei wird durch Verwendung der Service Class Mark (SCM) die Zuordnung des Mobilfunkteilnehmers zu seinem Dienstanbieter und somit die Realisierung verschiedener Tarifsysteme in einem Mobilfunknetz ermöglicht. Die erforderlichen Service Independent building Blocks (SIB's) zur Einrichtung des neuen IN-Dienstes, die mit Hilfe des Service Creation Environment (SCE) kreiert werden können, müssen vom Systemhersteller bereitgestellt werden.

Nach Fertigstellung des neuen IN-MOC Dienstes wird der Dienst von der Dienste-Entwicklungssumgebung (SCE) zum Diensteverwaltungspunkt (SMP) übertragen.

In einem zweiten Schritt (2) wird der neue IN-Dienst einschließlich der dienstespezifischen Daten vom Diensteverwaltungspunkt (SMP) zum Dienstesteuerungspunkt (SCP) transferiert und dort aktiviert. Die dienstespezifischen Daten enthalten u.a. die Zuordnung von Service Class Mark (SCM), Aufenthaltsort des rufenden Mobilfunkteilnehmers, gerufene Nummer im Festnetz und Uhrzeit.

Ein Data Post Processing System (DPPS) markiert über den Mobile Switch Post Processor (MS-PP) in deren Heimatdatei (HLR) diejenigen Mobilfunkteilnehmer, welche den IN-MOC Dienst nutzen möchten, mit einer zugehörigen, nicht wählbaren Service Class Mark (SCM). Da die Zuordnung für jeden Mobilfunkteilnehmer gezielt erfolgt ist, ist die Voraussetzung geschaffen, verschiedene Vergebührungssysteme implementieren zu können, die vom IN-Netz erkannt und entsprechend behandelt werden (3).

Bei jeder Aufenthaltsbestimmung (LUP) des Mobilfunkteilnehmers (MS) wird die Service Class Mark (SCM) von der Heimatdatei (HLR) an die jeweilige Besucherdatei (VLR) übertragen (4).

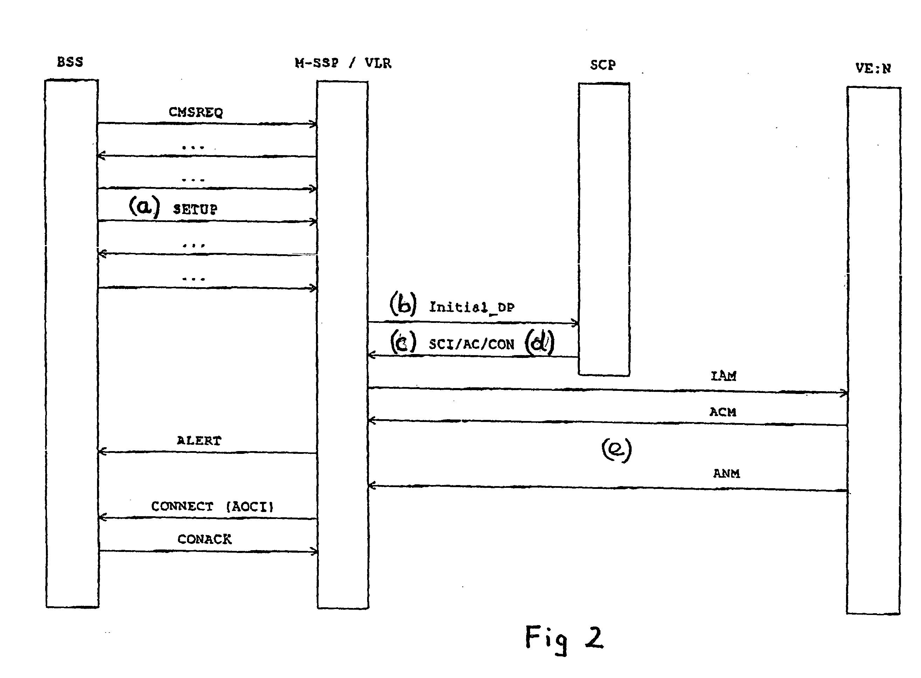

Anhand von Figur 2 wird im folgenden der Verbindungsaufbau und Signalfluß eines IN-MOC Diensteanrufs beschrieben.

Zunächst wird jeder Ruf des markierten Mobilfunkteilnehmers gemäß dem Standard Callhandling aufgebaut; Schritt (a).
Von einer die Mobilstation (MS) versorgenden Basisstation (BSS) wird dem der Mobilvermittlungseinrichtung (MSC) zugeordneten Dienstevermittlungspunkt(M-SSP) bzw. der Besucherdatei (VLR) dabei die gerufene B-Rufnummer und der Aufenthaltsort des rufenden Mobilfunkteilnehmers in Form eines Location Area Codes / Cell Identity (LAC/CI) mitgeteilt. Wurde der rufende Mobilfunkteilnehmer als IN-MOC Teilnehmer gekennzeichnet, so setzt der Dienstevermittlungspunkt (M-SSP) die Service Class Mark (SCM) vor die gerufene B-Rufnummer und sendet eine "Initial_DP Nachricht" zum Dienstesteüerungspunkt (SCP), Schritt (b). Diese Nachricht enthält neben der gerufenen B-Rufnummer ebenfalls den Aufenthaltsort des A-Teilnehmers in Form der Loction_Number_A. Der Dienstevermittlungspunkt (SCP) ermittelt, sofern es sich um einen Ruf in ein Festnetz handelt, die entsprechende Tarifzone und sendet diese per Send "Charging Information" (SCI) als "Charge_Number" zum Dienstevermittlungspunkt (M-SSP); Schritt (c).
Ferner werden per Funktion "Apply Charging" (AC) die ermittelten e-Parameter, welche zur Gebührenanzeige an der Mobilstation benötigt werden, und die Zielrufnummer per "CON" (Connect) vom Dienstesteuerungspunkt (SCP) zum Dienstevermittlungspunkt (M-SSP) übertragen; Schritt (d). Der Dienstevermittlungspunkt(M-SSP) übernimmt den weiteren Verbindungsaufbau zum B-Teilnehmer, Schritt (e), und legt, falls der gerufene Festnetzteilnehmer antwortet, ein Billing-Ticket mit der vom Dienstesteuerungspunkt (SCP) empfangenen Tarifzone an. Zudem gestattet die Übertragung der e-Parameter die flexible Gebührenanzeige an der Mobilstation per "GSM Advice of Charge, Information Level".

Falls der rufende Mobilfunkteilnehmer nicht ins Festnetz ruft, so wird dies vom Dienstesteuerungspunkt (SCP) erkannt und die entsprechende Gebührenanzeige angesteuert, ohne Einfluß auf das anzulegende Billing-Ticket zu nehmen.

Die in den Billing-Tickets enthaltene Tarifzone wird bei der Nachverarbeitung im Data Post Processing System (DPPS) ausgewertet (Figur 1) und fließt in die Erstellung der Kundenrechnung ein.

### Verwendete Abkürzungen

- BMD: Billing Mediation Device (Gebührenerfassungseinrichtung)
- BSS: Base Subsystem (Basisstation)
- DPPS: Data Post Processing System
(Datennachverarbeitungssystem).
- HLR: Home Location Register (Heimatdatei)
- IN: Intelligent Network (Intelligentes Netz)
- LAC/CI: Location Area Code/Cell Identity
(Aufenthaltsortcode/Zellenidentität)
- LUP: Location Update (Aufenthaltsortbestimmung)
- MS: Mobile Station (Mobilstation)
- MSC: Mobile Services Switching Center
(Mobilvermittlungseinrichtung)
- M-SSP: MSC-Service Switching Point
(Dienstevermittlungspunkt)
- MS-PP: Mobile Swit:ch Post Processor
- SCE: Service Creation Environment
(Dienste-Entwicklungssumgebung)
- SCM: Service Class Mark
- SCP: Service Control Point (Dienstesteuerungspunkt)
- SIB: Service Independent builidung Block
(Diensteunabhängiger Baustein)
- SMP: Service Management Point (Diensteverwaltungspunkt)
- SSP: Service Switching Point (Dienstevermittlungspunkt)
- VE:N: Vermittlungsstelle: Netzübergang zum Festnetz
- VLR: Visitor Location Register (Besucherdatei)
- AoC: Apply of Charging (Abrechungsanwendung)
- Tln: Teilnehmer (im Festnetz)
- MOC: Mobile Originated Call (Ruf mobilen Ursprungs)

## Patentansprüche

1. Verfahren zur entfernungsabhängigen Vergebührung in Mobilkommunikationsnetzen, bei dem
eine Zuordnung des Mobilfunkteilnehmers zu seinem Diensteanbieter per Service Class Mark erfolgt,
daß jeder Verbindungsaufbau bzw. -versuch zwischen einer Mobilstation (MS) und einem Teilnehmer (Tln) eines Festnetzes vom zuständigen Dienstevermittlungspunkt (M-SSP) erkannt und
durch diesen eine Abfrage des Intelligenten Netzes zu einem Dienstesteuerungspunkt (SCP) initiiert wird, **dadurch gekennzeichnet,**
daß der Dienstevermittlungspunkt (M-SSP) aufgefordert wird, unter anderem die Zielrufnummer, den Aufenthaltsort des rufenden Mobilfunkteilnehmers (MS) und die Zuordnung von Service Class Mark an diesen zu übermitteln,
daß im Dienstesteuerungspunkt (SCP) anhand der übermittelten Daten die Entfernung zwischen rufendem (MS) und gerufenen Teilnehmer (Tln) bestimmt und einer entsprechenden Tarifzone zugeordnet wird, wonach diese Daten über den Dienstevermittlungspunkt (M-SSP) und eine Gebührenerfassungseinrichtung (BMD) an ein Datennachverarbeitungssystem (DPPS) übergeben werden, in dem eine zeit- und entfernungsabhängige Vergebührung der Verbindung erfolgt.

2. Verfahren nach Anspruch 1, **dadurch gekennzeichnet**, daß der Mobilfunkteilnehmer (MS) als Nutzer des Dienstes des Intelligenten Netzes per Service Class Mark SCM in seiner Heimatdatei (HLR) markiert wird.

3. Verfahren nach einem der Ansprüche 1 oder 2, **dadurch gekennzeichnet,** daß die Vergebührung vollständig durch das Intelligente Netz erfolgt.

4. Verfahren nach einem der Ansprüche 1 bis 3, **dadurch gekennzeichnet,** daß dem Mobilfunkteilnehmer (MS) per Funktion "Advice of Charge" AOC die Gebühren für die Verbindung angezeigt werden.

5. Verfahren nach einem der Ansprüche 1 bis 4, **dadurch gekennzeichnet,** daß die Lokalisierung des rufenden Mobilfunkteilnehmers (MS) auf Funkzellenbasis anhand der Location Update Prozedur LUP erfolgt.

6. Verfahren nach einem der Ansprüche 1 bis 5, **dadurch gekennzeichnet,** daß die einmal ermittelte Tarifzone während der gesamten Verbindungsdauer gültig bleibt.

## Claims

1. Method for distance-related call-charging in mobile communication networks, wherein the mobile radio subscriber is assigned to his service provider by service class mark, every connection or attempted connection between a mobile station (MS) and a subscriber (Tln) of a fixed network is detected by the competent service switching point (M-SSP) which initiates an inquiry of the intelligent network to a service control point (SCP), **characterized in that** the service switching point is requested to transmit to the latter *inter alia* the destination telephone number, the location of the mobile radio subscriber (MS) initiating the call and the service class mark assignment, and in that the distance between calling (MS) and called subscribers (Tln) is determined at the service control point (SCP) from the data transmitted and is assigned to a corresponding tariff zone, after which these data are transmitted via the service switching point (M-SSP) and a billing mediation device (BMD) to a data post processing system (DPPS) in which the connection is charged on the basis of duration and distance.

2. Method according to Claim 1, **characterized in that** the mobile radio subscriber (MS) is marked in his home location register (HLR) by service class mark SCM as user of the service of the intelligence network.

3. Method according to Claim 1 or Claim 2, **characterized in that** charging is conducted entirely by the intelligence network.

4. Method according to any one of Claims 1 to 3, **characterized in that** the charges for the connection are indicated to the mobile radio subscriber (MS) by "advice of charge" AOC function.

5. Method according to any one of Claims 1 to 4, **characterized in that** the location of the mobile radio subscriber (MS) initiating the call is identified on a radio cell basis by the location update procedure LUP.

6. Method according to any one of Claims 1 to 5, **characterized in that** the tariff zone once established remains valid for the whole duration of the connection.

## Revendications

1. Procédé de tarification en fonction de la distance, dans des réseaux de radiocommunication mobile, selon lequel une affectation de l'abonné au réseau mobile à son prestataire de service est effectuée par identification de classe de service, et chaque établissement ou tentative de communication entre une station mobile (MS) et un abonné (Tln) d'un réseau fixe est reconnu par le point de commutation de service compétent (M-SSP), lequel déclenche une interrogation du réseau intelligent à un point de commande de service (SCP),
**caractérisé en ce que** le point de commutation de service (M-SSP) est invité à communiquer entre autres le numéro d'appel de destination, l'endroit où se trouve l'abonné au réseau mobile appelant (MS) et l'affectation de l'identification de classe de service à celui-ci,
et en ce que dans le point de commande de service (SCP), la distance entre l'abonné appelant (MS) et l'abonné appelé (Tln) est définie à l'aide des données communiquées et est affectée à une zone tarifaire correspondante, après quoi ces données sont transmises par l'intermédiaire du point de commutation de service (M-SSP) et d'un dispositif d'enregistrement de tarif (BMD) à un système de post-traitement de données (DPPS) dans lequel a lieu une tarification de la communication en fonction de la durée et de la distance.

2. Procédé selon la revendication 1, **caractérisé en ce que** l'abonné au réseau mobile (MS) est identifié dans son enregistreur de localisation nominal (HLR) comme utilisateur du service du réseau intelligent par l'identification de classe de service (SCM).

3. Procédé selon la revendication 1 ou 2, **caractérisé en ce que** la tarification est effectuée entièrement par le réseau intelligent.

4. Procédé selon l'une des revendications 1 à 3, **caractérisé en ce que** les taxes pour la communication sont présentées à l'abonné au réseau mobile (MS) par la fonction "Advice of Charge" AOC.

5. Procédé selon l'une des revendications 1 à 4, **caractérisé en ce que** la localisation de l'abonné appelant (MS) se fait sur la base des cellules radio à l'aide de la procédure de localisation (LUP).

6. Procédé selon l'une des revendications 1 à 5, **caractérisé en ce que** la zone tarifaire qui a été déterminée une fois reste valable pendant toute la durée de la communication.
